# EUROPÄISCHE PATENTSCHRIFT

(11) **EP 2 449 689 B1**
(45) Veröffentlichungstag und Bekanntmachung des Hinweises auf die Patenterteilung: **03.04.2013**
(21) Anmeldenummer: 10742075.4
(22) Anmeldetag: 24.06.2010
(51) Int. Cl.: H04B 1/38, H04B 1/00

(54) **VERFAHREN ZUR SCHALTUNG VON SIGNALZWEIGEN UND DAFÜR AUSGEBILDETE FUNKTIONSGRUPPE**
METHOD FOR CONNECTING SIGNAL PATHS, AND FUNCTION GROUP DESIGNED THEREFOR
PROCÉDÉ DE COMMUTATION DE VOIES DE SIGNALISATION, ET GROUPE FONCTIONNEL CONFIGURÉ À CETTE FIN

(30) Priorität: 30.06.2009 DE 102009027358
(43) Veröffentlichungstag der Anmeldung: 09.05.2012
(73) Patentinhaber: Funkwerk Dabendorf GmbH, 15806 Dabendorf (DE)
(72) Erfinder: NAST, Helmut, 12557 Berlin (DE); GEBAUER, Christoph, 12203 Berlin (DE); JACOBI, Raimo, 10318 Berlin (DE)
(74) Vertreter: Brunotte, Joachim Wilhelm Eberhard
(86) Internationale Anmeldenummer: PCT/DE2010/050040
(87) Internationale Veröffentlichungsnummer: WO 2011/000369

(56) Entgegenhaltungen:
- EP-A2- 1 841 083
- WO-A1-2008/089755
- DE-A1- 19 536 640

## Beschreibung

Die Erfindung betrifft eine Lösung, mittels welcher Signalzweige einer Schaltungsanordnung zur Verarbeitung und/oder zur Beeinflussung von Signalen der Funkkommunikation in Abhängigkeit von der Anwesenheit eines Sendesignals eines mit der betreffenden Schaltungsanordnung betriebenen Kommunikationsendgeräts aktiv oder inaktiv geschaltet werden. Sie bezieht sich auf ein entsprechendes Verfahren und eine zur Durchführung des Verfahrens ausgebildete Funktionsgruppe, welche ein unmittelbarer Bestandteil der Schaltungsanordnung mit den zu schaltenden Signalzweigen ist oder einer solchen Schaltungsanordnung schaltungstechnisch zugeordnet ist.

Bei Schaltungsanordnungen, welche der Verarbeitung und/oder der Beeinflussung von Signalen der Funkkommunikation dienen, ist es in Abhängigkeit ihrer Ausbildung und ihres Einsatzzwecks in manchen Fällen erforderlich, korrespondierend mit einem jeweiligen Betriebszustand jeweils unterschiedliche Signalzweige der betreffenden Schaltungsanordnung zu aktivieren oder zu deaktivieren. Dabei kann die Aktivierung beziehungsweise Deaktivierung jeweiliger Signalzweige einer solchen Schaltungsanordnung beispielsweise in Abhängigkeit von der Anwesenheit eines Sendesignals eines mit der Schaltungsanordnung betriebenen Kommunikationsendgeräts (im Weiteren vereinfachend auch als Endgerät bezeichnet) erfolgen.

So ist es zum Beispiel im Zusammenhang mit dem Einsatz von Freisprecheinrichtungen für das Betreiben von Kommunikationsendgeräten beziehungsweise Endgeräten, nämlich Mobilfunkgeräten in Kraftfahrzeugen bekannt, die beim Betrieb des Mobilfunkgeräts mit der Freisprecheinrichtung zwischen einer externen Antenne und dem Mobilfunkgerät auftretende Dämpfung mittels spezieller, dafür ausgebildeter Schaltungsanordnungen zu kompensieren. Derartige Schaltungsanordnungen werden beispielsweise durch die DE 195 36 640 A1 und die DE 10 2006 010 963 A1 beschrieben. Die in den vorgenannten Druckschriften beschriebenen Schaltungsanordnungen dienen der Kompensation der Dämpfung, welcher die für ein mit der Schaltungsanordnung betriebenes Mobilfunkgerät eingehenden und die von dem betreffenden Mobilfunkgerät ausgehenden Signale auf dem Weg zwischen der externen Antenne und dem Mobilfunkgerät unterliegen. Sie sind dabei so ausgebildet, dass ein der Verstärkung von Sendesignalen des Mobilfunkgeräts dienender Sendezweig der betreffenden Schaltungsanordnung zur Dämpfungskompensation nur bei Anwesenheit eines von dem Mobilfunkgerät ausgehenden Sendesignals aktiv ist. Solange das mit der Schaltungsanordnung betriebene Mobilfunkgerät nur Mobilfunksignale empfängt oder gewissermaßen auf eingehende Mobilfunksignale wartet, aber selber keine Signale sendet, ist der diesem Mobilfunkgerät zugeordnete Sendezweig der Schaltungsanordnung insoweit inaktiv, als dass zumindest der betreffende Signalzweig unterbrochen ist und gegebenenfalls außerdem der oder die darin angeordneten Verstärker, nämlich beispielsweise Vorverstärker und Sende- beziehungsweise Leistungsverstärker, in Bezug auf HF-Signale abgeschaltet sind.

Die erstgenannte Druckschrift bezieht sich auf eine gattungsgemäße Schaltungsanordnung zur Verwendung mit im GSM-Netz betreibbaren Mobilfunkgeräten, während die in der zweitgenannten Druckschrift beschriebene Schaltungsanordnung unterschiedliche Mobilfunknetze unterstützt und somit mehrbandfähig ist. Beiden Lösungen ist gemeinsam, dass ein Teil der von dem mit der jeweiligen Schaltungsanordnung betriebenen Mobilfunkgerät abgegebenen Sendeleistung mittels eines HF-Kopplers ausgekoppelt und im Wege einer Schwellwertbildung das Vorhandensein eines Sendesignals detektiert wird. Veranlasst durch die Detektionsschaltungen und eine ihnen zugeordnete Auswerteeinheit werden dann entsprechende HF-Schaltmittel betätigt, durch welche die Schaltungsanordnung den für den jeweiligen Betriebszustand vorgesehenen Schaltzustand einnimmt.

Es hat sich gezeigt, dass die Voraussetzungen, unter denen ein Sendesignal erkannt wird, für die verschiedenen Mobilfunkstandards sehr unterschiedlich sind. Insoweit ist für mehrbandfähige Schaltungsanordnungen, welche für den wahlweisen Betrieb mit Mobilfunkgeräten unterschiedlicher Mobilfunknetze geeignet sind, ein verhältnismäßig hoher Schaltungsaufwand zu betreiben, um sicherzustellen, dass unabhängig von dem gerade verwendeten Mobilfunknetz ein Sendesignal des jeweils mit der Schaltungsanordnung betriebenen Mobilfunkgeräts stets zuverlässig erkannt wird. Dabei gilt es zu bedenken, dass mit den betreffenden mehrbandfähigen Schaltungsanordnungen gegebenenfalls sogar wahlweise Mobilfunkgeräte unterschiedlicher Mobilfunkstandards betrieben werden können, so dass beim Anschluss eines entsprechenden Endgerätes beziehungsweise Mobilfunkgerätes nicht bekannt ist, in welchem Frequenzband dieses arbeitet. Durch die DE 10 2008 040 395 wird eine Detektionsschaltung vorgeschlagen, welche die Zuverlässigkeit der Detektion eines Sendesignals eines an einer mit dieser Detektionsschaltung ausgestatteten Schaltungsanordnung zur Dämpfungskompensation betriebenen Mobilfunkgeräts deutlich erhöht. Die betreffende Detektionsschaltung ist so ausgebildet, dass für die Detektion des Sendesignals des Mobilfunkgeräts der gesamte Pegel des Sendesignals genutzt wird. Bei einer mehrbandfähigen Schaltungsanordnung muss jedoch jedem Sendezweig für ein durch die betreffende Schaltungsanordnung unterstütztes Frequenzband eine solche Detektionsschaltung zugeordnet werden. Insoweit wird durch den Einsatz der in der Druckschrift beschriebenen DetektionsSchaltung zwar die Zuverlässigkeit der Detektion des Sendesignals eines jeweils mit der Schaltungsanordnung zur Dämpfungskompensation betriebenen Mobilfunkgeräts erhöht, jedoch ist der erforderliche Schaltungsaufwand immer noch beträchtlich. Zudem sind die den einzelnen Sendezweigen zugeordneten Detektionsschaltungen jeweils auf das spezielle Frequenzband des betreffenden Sendezweiges ausgelegt. Hierdurch ist die Flexibilität der Schaltungsanordnung im Hinblick auf eine eventuelle Anpassung an die Erfordernisse zukünftiger Mobilfunkstandards eingeschränkt. Auch im Falle einer Einbeziehung anderer Funkstandards, wie beispielsweise W-LAN oder Wimax, ist die Schaltungsanordnung um speziell für diese Funkübertragungsstandards hergerichtete beziehungsweise ausgelegte Detektionsschaltungen zu erweitern.

WO 2008/089755 beschreibt eine mehrbandfähige, modular aufgebaute und mehrteilige Schaltungsanordnung zum Kompensieren der Dämpfung, welcher ein-und ausgehende HF-Funksignale in Signalwegen zwischen einem Sende- und Empfangsgerät und einer mit diesem Gerät genutzten externen Antenne unterliegen.

Aufgabe der Erfindung ist es, eine Lösung bereitzustellen, welche im Zusammenhang mit der in Abhängigkeit von der Anwesenheit eines Sendesignals erfolgenden Schaltung von Signalzweigen in Schaltungsanordnungen zur Verarbeitung und/oder Beeinflussung von Signalen der Funkkommunikation eine erhöhte Flexibilität im Hinblick auf die Detektion von Sendesignalen für unterschiedliche Funkstandards ermöglicht. Insoweit soll die betreffende Lösung die zuverlässige Detektion des Sendesignals eines, mit einer mehrere Funkstandards und Frequenzbänder unterstützenden Schaltungsanordnung der vorgenannten Art betriebenen Kommunikationsendgerätes gewährleisten, ohne dass hierzu bekannt sein muss, nach welchem der von der Schaltungsanordnung unterstützten Funkstandards das Kommunikationsendgerät arbeitet und ohne dass sich hierdurch ein erhöhter schaltungstechnischer Aufwand ergibt. Hierzu sind ein Verfahren und eine Vorrichtung anzugeben.

Die Aufgabe wird durch ein Verfahren mit den Merkmalen des Hauptanspruchs gelöst. Eine die Aufgabe lösende Funktionsgruppe, welche als Bestandteil einer Schaltungsanordnung zur Verarbeitung und/oder Beeinflussung von Signalen der Funkkommunikation ausgebildet ist oder einer derartigen Schaltungsanordnung zugeordnet werden kann, wird durch den ersten vorrichtungsbezogenen Anspruch beziehungsweise Sachanspruch charakterisiert. Vorteilhafte Ausbeziehungsweise Weiterbildungen der Erfindung sind durch die jeweiligen Unteransprüche gegeben.

Bei dem zur Lösung der Aufgabe vorgeschlagenen Verfahren zur Schaltung von Signalzweigen in einer Schaltungsanordnung zur Verarbeitung und/oder zur Beeinflussung von Signalen der Funkkommunikation handelt es sich um ein Verfahren, nach welchem zumindest die Sendezweige einer derartigen Schaltungsanordnung in Abhängigkeit von der Anwesenheit eines Sendesignals eines mit der Schaltungsanordnung betriebenen Endgeräts für die Funkkommunikation aktiv oder inaktiv geschaltet werden. Dabei geht die Lösung von einer Schaltungsanordnung aus, durch welche mehrere in der Funkkommunikation verwendete Frequenzbänder unterstützt werden. Beispielhaft seien insoweit die unterschiedlichen, im Mobilfunk gebräuchlichen Frequenzbänder genannt. Bei dem genannten Endgerät handelt es sich insoweit beispielsweise um ein Mobilfunkgerät, wobei die Erfindung hierauf nicht beschränkt ist. Die Erfindung bezieht sich vielmehr beispielsweise auch auf die Schaltung von Signalzweigen zur Verarbeitung und/oder Beeinflussung von Funksignalen des Wimax- oder W-LAN-Funkstandards. Sie lässt sich darüber hinaus auch auf Schaltungsanordnungen für zukünftige Funkstandards übertragen.

Wie bereits ausgeführt, ermöglicht es die vorgeschlagene Lösung, Signalzweige einer entsprechenden Schaltungsanordnung, nämlich zumindest deren Sendezweige in Abhängigkeit von der Anwesenheit eines Sendesignals eines mit der Schaltungsanordnung betriebenen und in mindestens einem von mehreren durch die Schaltungsanordnung unterstützten Frequenzbändern arbeitenden Endgeräts zu schalten.

Das Verfahren ist erfindungsgemäß so gestaltet, dass die in einem Grundzustand der Schaltungsanordnung deaktivierten Sendezweige, welche sich voneinander zumindest insoweit unterscheiden, als dass sie zur Übertragung von Sendesignalen in unterschiedlichen Frequenzbändern ausgelegt und daher mit entsprechenden Bandselektionsmitteln, wie Filtern und dergleichen, ausgestattet sind, zeitperiodisch nacheinander auf die Anwesenheit eines Sendesignals eines gerade mit der Schaltungsanordnung betriebenen Endgeräts überprüft werden. Erfindungsgemäß wird bei Anwesenheit eines solchen Sendesignals nur der für dessen Frequenzband zutreffende beziehungsweise ausgelegte Sendezweig aktiviert und dann nur noch dieser Sendezweig weiterhin auf das Vorhandensein eines Sendesignals überprüft. Dabei wird der aktivierte Sendezweig im Weiteren permanent auf das Vorhandensein eines Sendesignals geprüft. Sobald jedoch das Sendesignal ausbleibt, wird der entsprechende Sendezweig wieder deaktiviert und nach seiner Deaktivierung die zeitperiodische Überprüfung aller Sendezweige auf das Vorhandensein eines Sendesignals des mit der Schaltungsanordnung zur Verarbeitung und/oder Beeinflussung der Funksignale betriebenen Endgeräts, beispielsweise eines Mobiltelefons, fortgesetzt. Unter der Aktivierung eines Signalzweiges, wie insbesondere eines Sendezweiges soll dabei, wie bereits eingangs angedeutet, eine Betätigung von Schaltmittein der Schaltungsanordnung verstanden werden, in deren Folge dieser Zweig in den Signalweg, also durchgängig geschaltet wird. Vorzugsweise umfasst die Aktivierung eines Signalszweiges außerdem gegebenenfalls das HF-mäßige Einschalten in ihm angeordneter Verstärker. Entsprechend gilt umgekehrt, dass bei der Deaktivierung eines Signalzweiges der Signalfluss durch diesen Zweig unterbrochen wird und vorzugsweise in dem Zweig angeordnete Verstärker HF-mäßig abgeschaltet werden.

Gemäß dem Grundgedanken der Erfindung werden demnach die Sendezweige der das Verfahren nutzenden Schaltungsanordnung gewissermaßen in einer Art Pollingbetrieb permanent nacheinander auf das Vorhandensein eines Sendesignals des mit der Schaltungsanordnung betriebenen Endgeräts abgescannt. Diese Vorgehensweise führt unmittelbar zur Verringerung des schaltungstechnischen Aufwands, da nunmehr nicht mehr für jeden Sendezweig ein eigener Detektor vorgesehen werden muss. Vielmehr erfolgt die Überprüfung aller Sendezweige mittels eines Detektors, dem bis zu Detektion eines Sendesignals des Endgeräts fortlaufend nacheinander an den jeweiligen Sendezweigen abgegriffene Signalpegel zugeführt werden, um sie darauf zu überprüfen, ob sie ein Sendesignal repräsentieren. Zudem wird durch die Erfindung die Realisierung universeller Schaltungskonzepte ermöglicht, wobei der jeweilige konkrete schaltungstechnische Aufbau sehr einfach an die Zahl und die Art der zur Unterstützung durch die Schaltungsanordnung vorgesehenen Frequenzbänder angepasst werden kann.

Die Detektion eines jeweiligen Sendesignals erfolgt vorzugsweise durch einen Schwellwertvergleich. Dabei ist das Verfahren vorzugsweise so ausgestaltet, dass eine Entscheidung darüber, ob einer der Sendezweige einen als Sendesignal zu interpretierenden Signalpegel aufweist, erst nach der Auswertung der Signalpegel aller Signalzweige erfolgt. Dadurch ist es möglich, im Falle dessen, dass in mehr als einem Zweig ein oberhalb des jeweiligen Schwellwerts liegender Signalpegel detektiert wird, nur den bezüglich des jeweiligen Schwellwerts stärksten Signalpegel an einem Sendezweig zu berücksichtigen und so eventuelle Störpegel auf anderen Sendezweigen außer Betracht zulassen. Demnach wird auch frühestens nachdem alle Sendezweige der Schaltungsanordnung zumindest einmalig auf ein Sendesignal abgetastet wurden ein Sendezweig aktiviert, sofern im Ergebnis der Abtastung ein Sendesignal detektiert wurde. Erst dann nimmt die jeweilige Schaltungsanordnung den für diesen Fall vorgesehenen Betriebszustand ein. Fällt der Signalpegel in dem dann aktivierten und permanent weiter auf das Vorhandensein eines Sendesignals überprüften Sendezweig unter einen ebenfalls vorgegebenen Wert, so werden der betreffende Sendezweig wieder deaktiviert und die zeitperiodische Überprüfung aller Sendezweige auf das Vorhandensein eines Sendesignals fortgesetzt. Das Verfahren ist dabei so ausgestaltet, dass zwischen dem Signalpegel, welcher als aktives, zu Änderung des Betriebszustands der Schaltungsanordnung führendes Sendesignal interpretiert wird, und dem Signalpegel, bei welchem der betreffende, mit dem Auftreten des Sendesignals aktiv geschaltete Sendezweig wieder deaktiviert wird, eine Hysterese vorgesehen ist.

Das Verfahren kann noch dadurch weitergebildet sein, dass im Zuge der Detektion des Sendesignals beziehungsweise der Prüfung seiner fortdauernden Anwesenheit eine Messung der Leistung des Signals erfolgt. Die dabei jeweils ermittelte Leistung kann gegebenenfalls zur Einstellung weiterer Parameter der Schaltung genutzt werden.

Eine besonders praxisrelevante Ausbildungsform der Erfindung bezieht sich auf ein Verfahren, nach welchem in Abhängigkeit von der Anwesenheit eines Sendesignals sowohl Sendezweige, als auch Empfangszweige einer entsprechenden Schaltungsanordnung zur Verarbeitung und/oder Beeinflussung von Signalen der Funkkommunikation aktiv oder inaktiv geschaltet werden. Für derartige Schaltungsanordnungen ist es bekannt, einen in Abwesenheit eines Sendesignals eines mit ihnen betriebenen Endgeräts eingenommenen Grundzustand vorzusehen, bei dem ein Empfangszweig aktiviert ist, welcher den Empfang eingehender Signale in allen von der Schaltungsanordnung unterstützten Frequenzbändern und Funkstandards ermöglicht. In diesem Grundzustand kann daher jedes mit der Schaltungsanordnung betreibbare Endgerät eingehende Signale empfangen. Insoweit ist die Schaltungsanordnung in diesem Grundzustand für Signale aller von ihr unterstützten Frequenzbänder und Funkstandards gewissermaßen transparent. Für die Umsetzung mit einer solchen Schaltungsanordnung ist das Verfahren so gestaltet, dass der in dem Grundzustand der Schaltungsanordnung bis zur Detektion eines Sendesignals aktivierte (transparente) Empfangszweig während der Überprüfung eines jeweiligen Sendezweigs auf das Vorhandensein eines Sendesignals jeweils kurzzeitig deaktiviert wird. Hierdurch wird vermieden, dass etwa das Sendesignal eines anderen, in der Nähe der Schaltungsanordnung betriebenen Endgeräts, welches von der Schaltungsanordnung empfangen und aufgrund eines nicht vollständig vermeidbaren Übersprechens auf einen der Sendezweige der Schaltungsanordnung gelangt, fälschlicherweise als Sendesignal des unmittelbar an beziehungsweise mit der Schaltungsanordnung betriebenen Endgeräts interpretiert wird. Ein Sendesignal des mit der Schaltungsanordnung betriebenen Endgeräts ist demnach nur dann vorhanden, wenn ein solches auch während der kurzzeitigen Deaktivierung des transparenten Empfangszweiges der Schaltungsanordnung detektiert werden kann.

Die zur Lösung der Aufgabe vorgesehene Funktionsgruppe kann als Bestandteil einer Schaltungsanordnung zur Verarbeitung und Beeinflussung von Signalen der Funkkommunikation beziehungsweise zumindest von Sendesignalen eines mit der betreffenden Schaltungsanordnung betriebenen Endgeräts ausgebildet oder aber einer solchen Schaltungsanordnung als periphere Funktionsgruppe zugeordnet sein. Die Funktionsgruppe besteht aus einer Detektionseinheit mit einem Detektor zur Detektion eines Sendesignals des Endgeräts, aus elektronischen Schaltmitteln und einem Controller zur Auswertung von Signalen der Detektionseinheit sowie zur Steuerung der vorgenannten Schaltmittel. Bei der bereits mehrfach angesprochenen Schaltungsanordnung zur Verarbeitung und/oder Beeinflussung von Signalen der Funkkommunikation kann es sich beispielsweise um eine Schaltungsanordnung zur Dämpfungskompensation handeln. Derartige Schaltungsanordnungen dienen beispielsweise dazu, die beim Betrieb eines Mobilfunkgeräts an einer Freisprecheinrichtung mit einer externen Antenne zwischen der externen Antenne und dem Mobilfunkgerät auftretende Dämpfung zu kompensieren. In diesem Falle werden auch die Empfangszweige der Schaltungsanordnung entsprechend ihres jeweiligen Betriebszustands beziehungsweise in Abhängigkeit des Frequenzbandes, in welchem das mit der Schaltungsanordnung jeweils betriebene Mobilfunkgerät arbeitet, geschaltet.

Bei der erfindungsgemäßen Funktionsgruppe ist eines der von dem Controller betätigten Schaltmittel ein als Bestandteil der Detektionseinheit ausgebildeter Multiplexer. Dieser Multiplexer der Detektionseinheit wird bis zur Detektion eines Sendesignals des an der betreffenden Schaltungsanordnung betriebenen Endgeräts durch den Controller der Funktionseinheit zeitperiodisch zur sequenziellen Abtastung der Sendezweige auf das Vorhandensein eines Sendesignals des Endgeräts durchgeschaltet. Über diesen Multiplexer werden demnach die Signalpegel der einzelnen Sendezweige gewissermaßen in einem ständigen Umlauf dem eigentlichen Detektor nacheinander zur Bewertung, das heißt zur Überprüfung auf das Vorhandensein eines Sendesignals, zugeführt. Wird ein Sendesignal detektiert, nimmt der Multiplexer der Detektionseinheit eine Schaltstellung ein, in welcher der für das Frequenzband des detektierten Sendesignals zutreffende, durch den Controller der Funktionsgruppe aktivierte Sendezweig der Schaltungsanordnung mittels des Detektors permanent auf das Vorhandensein eines Sendesignals überprüft wird. In dieser Stellung wird dann nur noch der betreffende, aktivierte Sendezweig auf das Vorhandensein eines Sendesignals des Endgeräts geprüft, während die anderen inaktiven Sendezweige für die Dauer der Anwesenheit eines Sendesignals in dem aktivierten Sendezweig von der Detektionseinheit nicht mehr abgetastet werden. Sobald jedoch das Sendesignal in dem aktivierten Sendezweig ausbleibt, wird der betreffende Sendezweig wieder deaktiviert und das zeitperiödische Durchschalten des Multiplexers der Detektionseinheit beginnt erneut.

Soweit vorstehend und in den Patentansprüchen ausgeführt ist, dass der vorgenannte Multiplexer als Bestandteil der Detektionseinheit ausgebildet ist, bezieht sich dies auf eine funktionelle Sicht. Der Multiplexer ist demnach ein funktioneller und nicht zwingend auch ein integraler Bestandteil der Detektionseinheit. Er kann der Detektionseinheit demnach physisch auch nur zu- oder beigeordnet sein, wobei der Multiplexer im Hinblick auf seine Funktion, dem Detektor sequentiell die Pegel der Sendezweige einer nach dem erfindungsgemäßen Prinzip ausgestatteten Schaltungsanordnung zur Überprüfung auf die Anwesenheit eines Sendesignals zuzuführen, in jedem Falle als funktioneller Bestandteil der Detektionseinheit anzusehen ist.

Wie bereits ausgeführt, ist die erfindungsgemäße Funktionseinheit vorzugsweise für den Einsatz mit Schaltungsanordnungen zur Dämpfungskompensation konzipiert, bei denen in Abhängigkeit der Anwesenheit eines Sendesignals eines mit ihnen betriebenen Endgeräts vorzugsweise sowohl Sendezweige, als auch Empfangszweige der entsprechenden Schaltungsanordnung aktiviert oder deaktiviert werden. Bei einer für diesen Zweck geeigneten Ausbildungsform der Funktionseinheit wird der als (funktioneller) Bestandteil der Detektionseinheit ausgebildete Multiplexer von dem Controller bis zur Detektion eines Sendesignals des Endgeräts synchron und korrespondierend mit einem endgeräteseitig angeordneten Multiplexer durchgeschaltet, über welchen jeweils einer, von mehreren für die Übertragung von Sendesignalen in voneinander verschiedenen Frequenzbändern ausgebildeten sowie ausgangsseitig zusammengeführten Sendezweigen der Schaltungsanordnung mit dem Endgerät verbunden ist. Korrespondierend meint dabei, dass der als Bestandteil der Detektionseinheit ausgebildete Multiplexer so geschaltet wird, dass auch jeweils der über den endgeräteseitigen Multiplexer mit dem Endgerät verbundene Signalzweig auf das Vorhandensein eines Sendesignals überprüft wird.

Gemäß einer besonders bevorzugten Ausbildungsform der Erfindung verfügt der Multiplexer der Detektionseinheit für jeden Sendezweig der mit der Funktionsgruppe betriebenen Schaltungsanordnung über zwei Schaltstellungen. Bei Abwesenheit eines Sendesignals wird dabei der Multiplexer der Detektionseinheit zeitperiodisch so durchgeschaltet, dass er kurzzeitig immer nur die erste Schaltstellung für die einzelnen Sendezweige einnimmt. In dieser jeweils ersten Schaltstellung wird dem Detektor der Detektionseinheit der gesamte Signalpegel des jeweils abgetasteten Sendezweigs zur Auswertung zugeführt. Wird nun das dem Detektor zugeführte Signal als Sendesignal erkannt, dann wird der betreffende Sendezweig aktiviert. Das heißt, es werden der Sendezweig in den Signalweg zwischen dem Endgerät und der externen Antenne geschaltet und gegebenenfalls darüber hinaus die andernfalls HF-mäßig abgeschalteten Verstärker des betreffenden Sendezweigs (HF-mäßig) eingeschaltet. Zudem wird der Multiplexer der Detektionseinheit auf die zweite, dem aktivierten Sendezweig zugeordnete Schaltstellung geschaltet. In dieser Schaltstellung wird dann mittels eines HF-Kopplers ein Teil des bereits verstärkten Sendesignals ausgekoppelt und weiterhin auf die Anwesenheit eines als Sendesignal zu interpretierenden Signalpegels überprüft. Durch diese Maßnahme wird die Zuverlässigkeit der Detektion des Sendesignals noch erhöht, da bis zu dessen Auftreten der Detektoreinheit jeweils der gesamte Pegel eines Sendezweigs zugeführt wird.

Um sicherzustellen, dass der zuvor aktivierte Sendezweig während des Umschaltvorgangs von der ersten ihm im Multiplexer der Detektionseinheit zugeordneten Schaltstellung auf die zweite ihm im Multiplexer zugeordnete Schaltstellung nicht wieder deaktiviert wird, verfügt die Detektionseinheit über eine Selbsthaltefunktion, welche sicherstellt, dass der Umschaltvorgang durch den Detektor nicht als Ausbleiben des Sendesignals des Endgeräts interpretiert wird. Diese Selbsthaltefunktion wird softwaremäßig durch eine von dem Controller abgearbeitete Software oder hardwaremäßig, beispielsweise mittels eines zeitverzögernden Schaltglieds, realisiert.

Wie bereits ausgeführt, sind die verschiedenen Sendezweige der mit der erfindungsgemäßen Funktionseinheit versehenen Schaltungsanordnung ausgangsseitig zusammengeführt. Sie sind hierbei vorzugsweise über ein Element der erfindungsgemäßen Funktionsgruppe zusammengeführt. Bei letzterem handelt es sich gemäß einer bevorzugten Ausbildungsform ebenfalls um einen von dem Controller der Funktionseinheit geschalteten Multiplexer. Sofern es sich bei der mit der Funktionseinheit versehenen Schaltungsanordnung um eine Schaltungsanordnung zur Dämpfungskompensation bei sowohl für das Endgerät eingehenden als auch bei von diesem Endgerät ausgesandten Signalen handelt, werden mittels dieses Multiplexers die Empfangszweige und die Sendezweige der betreffenden Schaltungsanordnung entsprechend dem Betriebszustand und frequenzbandrichtig geschaltet.

Den vorstehenden Ausführungen folgend, ist die erfindungsgemäße Funktionseinheit entsprechend einer möglichen Ausbildungsform als ein integraler Bestandteil einer wie zuvor beschrieben ausgebildeten Schaltungsanordnung zur Dämpfungskompensation realisiert.

Die Erfindung soll nachfolgend anhand eines Ausführungsbeispiels nochmals näher erläutert werden. In den zugehörigen Zeichnungen zeigen:
- Fig. 1:: das Blockschaltbild einer mit der erfindungsgemäßen Funktionsgruppe ausgestatteten Schaltungsanordnung,
- Fig. 2:: die Einzelheit A des Blockschaltbildes der Schaltungsanordnung nach Fig. 1 mit dem Multiplexer der Detektionseinheit,
- Fig. 3:: die Einzelheit B des Blockschaltbildes der Schaltungsanordnung nach Fig. 1 mit dem endgeräteseitigen Multiplexer,

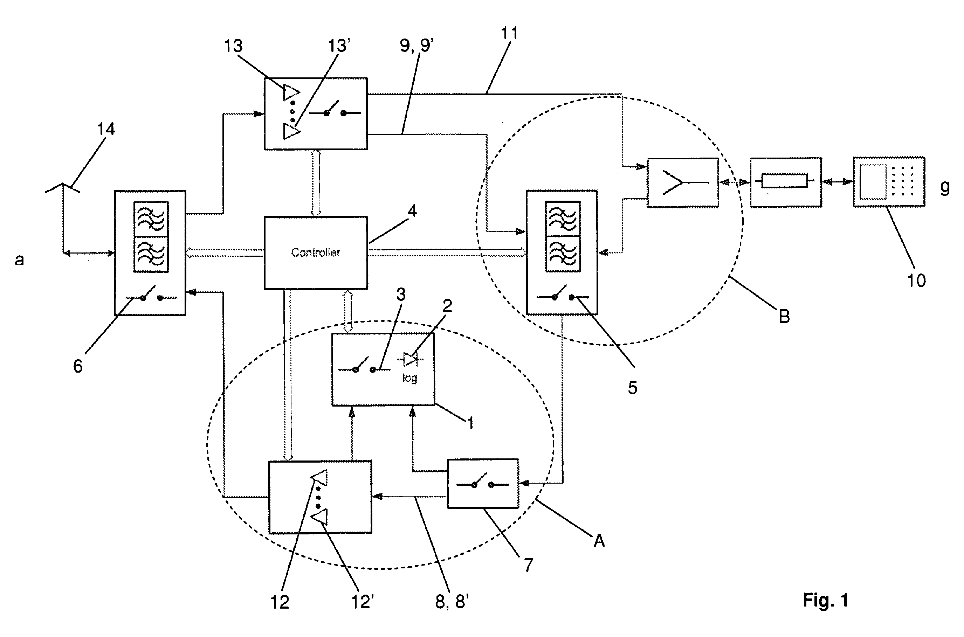

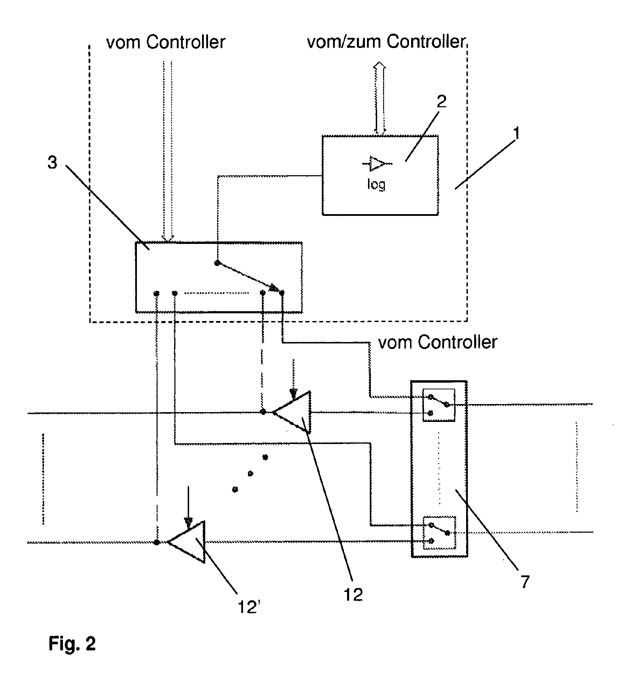

Die Fig. 1 zeigt ein grobes Blockschaltbild einer Schaltungsanordnung zur Verarbeitung beziehungsweise Beeinflussung von Signalen der Funkkommunikation. Genauer gesagt handelt es sich bei diesem Ausführungsbeispiel um eine Schaltungsanordnung zur Dämpfungskompensation, wie sie beispielsweise im Zusammenhang mit dem Betrieb eines Mobilfunkgeräts 10 an einer mit einer externen Antenne 14 ausgestatteten Freisprecheinrichtung einsetzbar ist. Durch diese Schaltungsanordnung wird die in den Signalwegen zwischen dem Endgerät 10 respektive dem Mobilfunkgerät und der externen Antenne 14 auftretende Dämpfung der von dem Endgerät 10 empfangenen und von ihm ausgesendeten Signale kompensiert. Bestandteil der dargestellten Schaltungsanordnung ist die erfindungsgemäße Funktionsgruppe. Die erfindungsgemäße Funktionsgruppe umfasst danach im Wesentlichen eine Detektionseinheit 1 zur Detektion eines Sendesignals des mit der Schaltungsanordnung betriebenen Mobilfunkgeräts 10, mehrere Schaltmittel 3, 5, 6, 7, insbesondere antennenseitig a und endgeräteseitig g angeordnete Multiplexer 5, 6 sowie einen hier nicht im Detail dargestellte Multiplexer 3 der Detektionseinheit 1 (siehe dazu Fig. 2) und einen Controller 4 zur Auswertung der Signale der Detektionseinheit 1 sowie zur Steuerung der Schaltmittel 3, 5, 6, 7 in Abhängigkeit des Detektionsergebnisses. Die gezeigte, mit der erfindungsgemäßen Funktionseinheit ausgestattete Schaltungsanordnung unterstützt mehrere Frequenzbänder. Dies wird durch die zwei Schaltsymbole für Empfangsverstärker 13, 13' der Schaltungsanordnung und die Punkte zwischen ihnen sowie äquivalent durch die zwei Schaltsymbole für Sendeverstärker 12, 12' und die Punkte zwischen ihnen symbolisiert, wobei die Punkte jeweils andeuten, dass mehrere Empfangszweige 9, 9' beziehungsweise mehrere Sendezweige 8, 8' grundsätzlich gleichen Aufbaus, also jeweils mit Empfangsverstärkern 13, 13' beziehungsweise Sendeverstärkern 12, 12', ausgebildet sind. So wird von einer solchen Schaltungsanordnung beispielsweise das Empfangen und Senden von Funksignalen des Mobilfunks, wie des US-GSM- beziehungsweise GSM850-Standards, des GSM900-Standards, des GSM1800-Standards und des UMTS-Standards und/oder von Mobilfunkstandards der 3. Generation für so genannte 3G-Geräte, unterstützt, wobei die Dämpfung, welcher entsprechende Signale zwischen der externen Antenne 14 und dem Endgerät 10 unterworfen sind, von der Schaltungsanordnung kompensiert wird.

Mit Hilfe der durch den Controller 4 betätigen Schaltmittel 3, 5, 6 7 sind in Abhängigkeit des Vorhandenseins eines Sendesignals des Mobilfunkgeräts 10 unterschiedliche Betriebszustände der Schaltungsanordnung realisierbar. In einem ersten Betriebszustand, dem Grundzustand, ist die Schaltungsanordnung dabei in Bezug auf für das Mobilfunkgerät 10 eingehende Funksignale transparent. Das heißt, alle eingehenden Funksignale innerhalb eines beliebigen der durch die Schaltungsanordnung unterstützten Frequenzbänder können über einen oberen Empfangszweig 11 ungehindert zu dem Endgerät 10 beziehungsweise Mobilfunkgerät gelangen und dort empfangen werden. Gleichzeitig wird jedoch mit Hilfe der erfindungsgemäßen Funktionsgruppe ständig geprüft, ob von dem Mobilfunkgerät 10, von welchem nicht bekannt ist, innerhalb welches der durch die Schaltungsanordnung unterstützen Frequenzbänder es arbeitet, ein Sendesignal ausgeht. Dazu werden die Sendezweige 8, 8' der Schaltungsanordnung nacheinander zeitperiodisch auf das Anstehen eines entsprechenden Sendesignals geprüft. Diese Prüfung wird durch den Controller 4 der erfindungsgemäßen Funktionsgruppe gesteuert.

Dieser schaltet den erfindungsgemäß in der Detektionseinheit 1 angeordneten Multiplexer 3 (siehe dazu Fig. 2) und den endgeräteseitig g angeordneten Multiplexer 5 zueinander synchron so durch, dass jeweils nacheinander die Signalpegel der einzelnen Sendezweige 8, 8' an der Detektionseinheit 1 beziehungsweise deren Detektor 2 zur Auswertung anstehen. Wird ein Sendesignal detektiert, wird der für das Frequenzband des detektierten Sendesignals zutreffende Sendezweig 8, 8' aktiviert. Das heißt, der entsprechende Sendezweig 8, 8' wird mittels der durch den Controller 4 angesteuerten Multiplexer 5, 6 und des Schaltmittels 7 in den Signalweg zwischen dem Mobilfunkgerät 10 und der externen Antenne 14 geschaltet. Darüber hinaus wird bei der dargestellten Ausbildungsform der Schaltungsanordnung der bis dahin HF-mäßig nicht aktive Sendeverstärker 12, 12' des betreffenden Sendezweigs 8, 8' durch entsprechende Ansteuerung eines nicht näher gezeigten Schaltmittels HF-mäßig eingeschaltet. Mit der entsprechenden Schaltung der Multiplexer 5, 6 durch den Controller 4 wird vorliegend gleichzeitig der für das betreffende Frequenzband ausgebildete Empfangszweig 9, 9' der Schaltungsanordnung aktiviert und anstelle des Empfangszweiges 11 in den Signalweg für von dem Endgerät 10 zu empfangende Funksignale geschaltet.

Die Fig. 2 betrifft die Einzelheit A der Schaltungsanordnung gemäß der Fig. 1. Sie zeigt einen Teil der als deren Bestandteil ausgebildeten (hier ohne den Controller 4 gezeigten) erfindungsgemäßen Funktionsgruppe und die entsprechend des Detektionsergebnisses aktivierten oder deaktivierten Sendezweige 8, 8' mit den Sendeverstärkern 12, 12'. Als Teil der erfindungsgemäßen Funktionsgruppe sind die Detektionseinheit 1 mit dem Detektor 2 und mit dem als funktioneller Bestandteil der Detektionseinheit 1 ausgebildeten Multiplexer 3 gezeigt. Aus der Abbildung ist ersichtlich, dass der Multiplexer 3 bei dem dargestellten Ausführungsbeispiel je auf das Vorhandensein eines Sendesignals überwachtem Sendezweig 8, 8' zwei Schaltstellungen S8₁, S8₂, S8'₁, S8'₂ aufweist und dabei in einer Wirkverbindung mit dem weiteren, von dem nicht gezeigten Controller 4 betätigten Schaltmittel 7 steht. In Abwesenheit eines Sendesignals des mit der Schaltungsanordnung betriebenen Mobilfunkgeräts 10 wird dabei der Multiplexer 3 zeitperiodisch so durchgeschaltet, dass er nacheinander immer nur auf eine erste für jeden der Sendezweige 8, 8' vorgesehene Schaltstellung S8₁,

S8'₁ gesetzt wird. Hierbei wird der vor der Verstärkerstufe beziehungsweise dem Verstärker 12, 12' des jeweiligen Sendezweiges 8, 8' anstehende Signalpegel dem Detektor 2 der Detektionseinheit 1 zur Auswertung zugeführt. Mit Hilfe eines Schwellwertvergleichs wird geprüft, ob dieser Signalpegel als Sendesignal zu interpretieren ist. Ist dies der Fall, so werden, wie bereits mehrfach ausgeführt, der zutreffende Sendezweig 8, 8' und Empfangszweig 9, 9' aktiviert und außerdem der Multiplexer 3 in die zu dem betreffenden Sendezweig 8, 8' zugehörige zweite Schaltstellung S8₂, S8'₂ gesetzt, wobei zur Aktivierung des Sendezweigs 8, 8' zumindest das entsprechende, vor dessen Sendeverstärker 12, 12' angeordnete Schaltmittel 7 umgeschaltet wird. In dieser Schaltstellung S8₂, S8'₂ beziehungsweise Schaltposition wird ein Teil des durch den Sendeverstärker 12, 12' des betreffenden Sendezweiges 8, 8' verstärkten Sendesignals mittels eines nicht näher gezeigten HF-Kopplers am Ausgang des betreffenden Sendeverstärkers 12, 12' ausgekoppelt und dem Detektor 2 zugeführt. Da der Multiplexer 3 nun für die Dauer der Anwesenheit eines Sendesignals in dieser Schaltstellung S8₂, S8'₂ verharrt, erfolgt somit anhand des ausgekoppelten Teils des bereits verstärkten Sendesignals eine permanente Überprüfung auf dessen weitere Anwesenheit. Wird kein Sendesignal mehr detektiert, so wird die Schaltung, wie bereits ausgeführt, wieder in den Grundzustand, das heißt in den transparenten Modus (Empfangszweig 11 aktiviert) zurückgesetzt. Durch eine entsprechende Programmierung des Controllers 4 ist sichergestellt, dass nach der Detektion eines Sendesignals, während des Umschaltens der bezüglich des entsprechenden Sendezweigs ersten Schaltstellung S8₁, S8'₁ des Multiplexers 3 auf die zugehörige zweite Schaltstellung S8₂, S8'₂ die Schaltungsanordnung in dem für das Vorhandensein eines Sendesignals des Mobilfunkgeräts 10 eingenommenen Betriebszustand - Empfangszweig 9, 9' und Sendezweig 8, 8' sind für das betreffende Frequenzband aktiviert - verbleibt. Hierdurch ist somit eine Selbsthaltefunktion für die Dauer des Umschaltvorgangs realisiert. Vorzugsweise ist diese Selbsthaltefunktion mittels einer vom Controller 4 verarbeiteten Software realisiert.

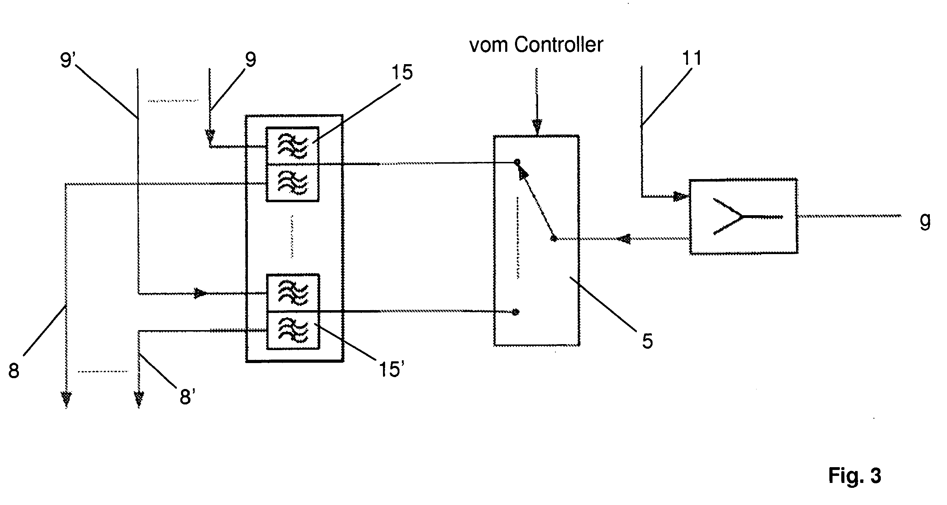

Die Fig. 3 zeigt die Einzelheit B der Schaltungsanordnung nach der Fig. 1. Dargestellt ist hier insbesondere der geräte- beziehungsweise endgeräteseitig g angeordnete Multiplexer 5, mit dem korrespondierend der Multiplexer 3 der Detektionseinheit 1 durch den Controller 4 während des Scan-Durchlaufs, also der fortwährenden sequenziellen Überprüfung der Sendezweige 8, 8' auf die Anwesenheit eines Sendesignals, in der schon beschriebenen Weise durchgeschaltet wird. In der Fig. 3 ist zu erkennen, dass für jedes durch die Schaltungsanordnung unterstützte Frequenzband ein Duplexer 15, 15' als Bestandteil des endgeräteseitigen Multiplexers 5 beziehungsweise an dem endgeräteseitigen Multiplexer 5 angeordnet ist. Die Duplexer 15, 15' dienen als Frequenzweiche zur Trennung zwischen Sende- und Empfangssignal für die in Abhängigkeit des Frequenzbandes des detektierten Sendesignals des Mobilfunkgeräts 10 aktivierten Signalzweige der Schaltungsanordnung. In gleicher Weise sind als Bestandteil beziehungsweise an dem antennenseitigen a Multiplexer ebenfalls Duplexer zur Trennung von Empfangs- und Sendesignal angeordnet.

### Liste der Bezugszeichen

- 1: Detektionseinheit
- 2: Detektor
- 3: Schaltmittel, Multiplexer
- 4: Controller
- 5: Schaltmittel, Multiplexer
- 6: Schaltmittel, Multiplexer
- 7: Schaltmittel
- 8, 8': Sendezweig
- 9, 9': Empfangszweig
- 10: Endgerät, zum Beispiel Mobilfunkgerät
- 11: Empfangszweig
- 12, 12': (Sende-) Verstärker
- 13, 13': (Empfangs-) Verstärker
- 14: Antenne
- 15, 15': Duplexer

- S81, S82: Schaltstellung
- S8'1, S8'2: Schaltstellung
- a: antennenseitig
- g: endgeräteseitig

## Patentansprüche

1. Verfahren zur Schaltung von Signalzweigen einer Schaltungsanordnung zur Verarbeitung und/oder Beeinflussung von Signalen der Funkkommunikation, nach welchem zumindest die Sendezweige (8, 8') der betreffenden Schaltungsanordnung in Abhängigkeit von der Anwesenheit eines Sendesignals eines mit ihr betriebenen, in mindestens einem von mehreren durch die Schaltungsanordnung unterstützten Frequenzbändern arbeitenden Endgeräts (10) für die Funkkommunikation aktiv oder inaktiv geschaltet werden, **dadurch gekennzeichnet, dass** die in einem Grundzustand der Schaltungsanordnung deaktivierten Sendezweige (8, 8'), welche sich voneinander zumindest insoweit unterscheiden, als dass sie zur Übertragung von Sendesignalen in unterschiedlichen Frequenzbändern ausgebildet sind, zeitperiodisch nacheinander auf das Vorhandensein eines Sendesignals des jeweils mit der Schaltungsanordnung betriebenen Endgeräts (10) überprüft werden und dass bei Anwesenheit eines solchen Sendesignals nur der für dessen Frequenzband zutreffende Sendezweig aktiviert und nur noch dieser Sendezweig weiterhin auf das Vorhandensein eines Sendesignals überprüft wird, wobei der betreffende, dann permanent auf das Vorhandensein des Sendesignals überprüfte Sendezweig bei ausbleibendem Sendesignal wieder deaktiviert und nach seiner Deaktivierung die zeitperiodische Überprüfung aller Sendezweige (8, 8') auf das Vorhandensein eines Sendesignals fortgesetzt wird.

2. Verfahren nach Anspruch 1 , **dadurch gekennzeichnet, dass** die Detektion eines Sendesignals durch Vergleich des an einem jeweiligen Sendezweig anstehenden Signalpegels mit einem für den betreffenden Sendezweig festgelegten Schwellwert erfolgt, wobei eine Entscheidung darüber, ob einer der Sendezweige (8, 8') einen als Sendesignal zu interpretierenden Signalpegel aufweist und welcher der Sendezweige (8, 8') infolge dessen gegebenenfalls zu aktivieren ist, erst nach der Auswertung der Signalpegel aller Signalzweige erfolgt und wobei zwischen dem Schaltpunkt zur Aktivierung eines Sendezweigs und dem Schaltpunkt zu seiner Deaktivierung eine Hysterese eingestellt wird.

3. Verfahren nach Anspruch 1 oder 2, **dadurch gekennzeichnet, dass** im Zusammenhang mit der Detektion eines Sendesignals des Endgeräts (10) und der Prüfung seiner fortdauernden Anwesenheit eine Messung der Leistung des Sendesignals erfolgt.

4. Verfahren nach einem der Ansprüche 1 bis 3, wobei in Abhängigkeit von der Anwesenheit eines Sendesignals sowohl Sendezweige (8, 8'), als auch Empfangszweige einer Schaltungsanordnung zur Verarbeitung und/oder Beeinflussung von Signalen der Funkkommunikation aktiv oder inaktiv geschaltet werden, **dadurch gekennzeichnet, dass** ein in dem Grundzustand der Schaltungsanordnung bis zur Detektion eines
Sendesignals aktivierter, für eingehende Signale aller von der Schaltungsanordnung unterstützten Frequenzbänder und Funkstandards transparenter Empfangszweig während der Überprüfung eines jeweiligen Sendezweigs auf das Vorhandensein eines Sendesignals jeweils kurzzeitig deaktiviert wird.

5. Funktionsgruppe mittels welcher Signalzweige einer mindestens Sendezweige (8, 8') aufweisenden Schaltungsanordnung zur Verarbeitung und/oder Beeinflussung mindestens der Sendesignale eines mit der betreffenden Schaltungsanordnung betriebenen Endgeräts (10) der Funkkommunikation in Abhängigkeit von der Anwesenheit eines Sendesignals des Endgeräts (10) aktiviert oder deaktiviert werden, bestehend aus einer Detektionseinheit (1) mit einem Detektor (2) zur Detektion eines Sendesignals des Endgeräts (10), aus elektronischen Schaltmitteln (3, 5, 6, 7) und einem Controller (4) zur Auswertung von Signalen der Detektionseinheit (1) sowie zur Steuerung der Schaltmittel (3, 5, 6, 7), **dadurch gekennzeichnet, dass** eines der Schaltmittel (3, 5, 6, 7) ein als Bestandteil der Detektionseinheit (1) ausgebildeter Multiplexer (3) ist, der bis zur Detektion eines Sendesignals des Endgeräts (10) durch den Controller (4) zeitperiodisch zur sequentiellen Abtastung der Sendezweige (8, 8') auf das Vorhandensein eines Sendesignals durchgeschaltet wird und nach der Detektion eines Sendesignals für die Dauer von dessen Anwesenheit eine Schaltstellung einnimmt, in welcher nur noch der für das Frequenzband des detektierten Sendesignals zutreffende, durch Betätigung entsprechender Schaltmittel (5, 6, 7) mittels des Controllers (4) aktivierte Sendezweig (8, 8') weiterhin auf das Vorhandensein eines Sendesignals überprüft wird, wobei der betreffende, dann permanent auf das Vorhandensein des Sendesignals überprüfte Sendezweig (8, 8') bei fehlendem Sendesignal von dem Controller (4) wieder deaktiviert und der Multiplexer (3) erneut zeitperiodisch durchgeschaltet wird.

6. Funktionsgruppe nach Anspruch 5, wobei mittels dieser sowohl Sendezweige (8, 8'), als auch Empfangszweige (9, 9', 1 1) einer Schaltungsanordnung zur Verarbeitung und/oder Beeinflussung von Signalen der Funkkommunikation in Abhängigkeit von der Anwesenheit eines Sendesignals eines mit der Schaltungsanordnung betriebenen Endgeräts (10) aktiviert oder deaktiviert werden, **dadurch gekennzeichnet, dass** der als Bestandteil der Detektionseinheit (1) ausgebildete Multiplexer (3) von dem Controller (4) bis zu Detektion eines Sendesignals des Endgeräts (10) synchron und korrespondierend mit einem endgeräteseitig (g) angeordneten Multiplexer (5) durchgeschaltet wird, über den jeweils einer, von mehreren für die Übertragung von Sendesignalen in voneinander verschiedenen Frequenzbändern ausgebildeten sowie ausgangsseitig zusammengeführten Sendezweigen (8, 8') der Schaltungsanordnung mit dem Endgerät (10) verbunden ist.

7. Funktionsgruppe nach Anspruch 5 oder 6, wobei in jedem Sendezweig (8, 8') der Schaltungsanordnung mindestens ein Verstärker (12, 12') angeordnet ist, **dadurch gekennzeichnet, dass** der als Bestandteil der Detektionseinheit (1) angeordnete Multiplexer (3) je auf das Vorhandensein eines Sendesignals abzutastenden Sendezweig (8, 8') zwei Schaltstellungen (S8₁, S8₂, S8'₁, S8'₂) aufweist, wobei der Multiplexer(3) bis zur Detektion eines Sendesignals des Endgeräts (10) zeitperiodisch so durchgeschaltet wird, dass er immer nur die erste einem jeden Sendezweig zugeordnete Schaltstellung (S8₁, S8'₁) einnimmt, in welcher der vor dem mindestens einen Verstärker (12, 12') des jeweiligen Sendezweigs (8, 8') anstehende Signalpegel an der Detektionseinheit (1) anliegt und wobei der Multiplexer (3) nach der Detektion eines Sendesignals für dessen Dauer die zweite, dem aktivierten Sendezweig (8, 8') zugeordnete Schaltstellung (S8₂, S8'₂) einnimmt, in welcher ein nach dem mindestens einem Verstärker (12, 12') dieses Sendezweiges (8, 8') ausgekoppelter Teil der verstärkten Sendeleistung an der Detektionseinheit (1) anliegt, wobei die Detektionseinheit (1) eine Selbsthaltefunktion aufweist, so dass die Schaltungsanordnung während des Umschaltens des Multiplexers (3) von ihrer ersten zur zweiten, dem aktivierten Sendezweig zugeordneten Schaltstellung (S8₂, S8'₂) in dem für die Anwesenheit eines Sendesignals vorgesehenen Betriebszustand verbleibt.

8. Funktionsgruppe nach Anspruch 7, **dadurch gekennzeichnet, dass** die Sendezweige (8, 8') der Schaltungsanordnung ausgangsseitig (a) über einen Multiplexer (6) an einer externen Antenne (14) für das Endgerät (10) zusammengeführt sind, wobei bei Anwesenheit eines Sendesignals der für das Frequenzband dieses Sendesignals zutreffende Sendezweig (8, 8') der Schaltungsanordnung über den von dem Controller (4) gesteuerten Multiplexer (6) mit der externen Antenne (14) verbunden ist.

9. Funktionsgruppe nach Anspruch 7 oder 8, **dadurch gekennzeichnet, dass** diese Bestandteil einer Schaltungsanordnung zum Kompensieren der in den Signalwegen zwischen einer externen Antenne (14) und dem Endgerät (10) auftretenden Dämpfung der für das Endgerät (10) eingehenden sowie der von dem Endgerät (10) ausgesendeten Funksignale ist.

## Claims

1. Method for connecting signal paths in a circuit arrangement for processing and/or influencing signals in radio communication, according to which at least the transmission paths (8, 8') of the corresponding circuit arrangement are activated or deactivated on the basis of the presence of a transmitted signal from a terminal (10) for the radio communication which is operated with the circuit arrangement and works in at least one of multiple frequency bands supported by the circuit arrangement, **characterised in that** the transmission paths (8, 8'), which are deactivated in a basic state of the circuit arrangement and which differ from each other at least insofar as they are designed to transmit transmitted signals in different frequency bands, are periodically checked in succession for the presence of a transmitted signal from the respective terminal (10) operated with the circuit arrangement and if such a transmitted signal is present, only that transmission path applicable for its frequency band is activated and only this transmission path continues to be checked for the presence of a transmitted signal, wherein the corresponding transmission path which is then permanently checked for the presence of the transmitted signal is deactivated again when the transmitted signal is absent and after its deactivation, the periodic checking of all transmission paths (8, 8') for the presence of a transmitted signal is continued.

2. Method according to claim 1, **characterised in that** a transmitted signal is detected by comparison of the signal level present at the transmission path concerned with a threshold value established for the corresponding transmission path, wherein a decision on whether one of the transmission paths (8, 8') has a signal level to be interpreted as a transmitted signal and which of the transmission paths (8, 8') should consequently where applicable be activated, is made only after evaluation of the signal level of all signal paths, and wherein a hysteresis is set between the switch point for activation of a transmission path and the switch point for its deactivation.

3. Method according to claim 1 or 2, **characterised in that** in connection with the detection of a transmitted signal from the terminal (10) and the checking for its continued presence, the power of the transmitted signal is measured.

4. Method according to any of claims 1 to 3, wherein depending on the presence of a transmitted signal, both the transmission path (8, 8') and the receiver path of a circuit arrangement for processing and/or influencing signals of the radio communication are activated or deactivated, **characterised in that** a receiver path, which is activated in the basic state of the circuit arrangement until detection of a transmitted signal and which is transparent for incoming signals of all frequency bands and radio standards supported by the circuit arrangement, is deactivated briefly during checking of a corresponding transmission path for the presence of a transmitted signal.

5. Function group by means of which signal paths of a circuit arrangement, having at least transmission paths (8, 8'), for processing and/or influencing at least the transmitted signals from a terminal (10) for radio communication working with the circuit arrangement concerned, are activated or deactivated on the basis of the presence of a transmitted signal from a terminal (10), consisting of a detection unit (1) with a detector (2) for detecting a transmitted signal from the terminal (10), electronic switch means (3, 5, 6, 7) and a controller (4) to evaluate signals from the detection unit (1) and control the switch means (3, 5, 6, 7), **characterised in that** one of the switch means (3, 5, 6,7) is a multiplexer (3) formed as part of the detection unit (1), which until detection of a transmitted signal from the terminal (10) by the controller (4) is periodically switched through for sequential scanning of the transmission paths (8, 8') for the presence of a transmitted signal and after detection of a transmitted signal, for the duration of its presence, assumes a switch position in which only that transmission path (8, 8') which is applicable for the frequency band of the detected signal and which is activated by operation of corresponding switch means (5, 6, 7) by means of the controller, continues to be checked for the presence of a transmitted signal, wherein this transmission path (8, 8') which is then permanently checked for the presence of the transmitted signal is deactivated again by the controller (4) when the transmitted signal is absent and the multiplexer (3) is again switched through periodically.

6. Function group according to claim 5, wherein by means of this both transmission paths (8, 8') and receiver paths (9, 9', 11) in a circuit arrangement for processing and/or influencing signals in radio communication are activated or deactivated on the basis of the presence of a transmitted signal from a terminal (10) operated with the circuit arrangement, **characterised in that** the multiplexer (3) formed as part of the detection unit (1) is switched through by the controller (4) until detection of a transmitted signal from the terminal (10) in synchrony and corresponding with a multiplexer (5) arranged on the terminal side (g), via which in each case one of multiple transmission paths (8, 8') of the circuit arrangement, which are designed for the transmission of transmitted signals in different frequency bands and which are merged on the output side, is connected with the terminal (10).

7. Function group according to claim 5 or 6, wherein in each transmission path (8, 8') of the circuit arrangement is arranged at least one amplifier (12, 12'), **characterised in that** the multiplexer (3) arranged as part of the detection unit (1) has two switch positions (S8₁, S8₂, S8'₁, S8'₂) for each transmission path (8, 8') to be scanned for the presence of a transmitted signal, wherein until detection of a transmitted signal from the terminal (10) the multiplexer (3) is switched through periodically such that it always only assumes the first switch position (S8₁, S8'₁) allocated to each transmission path, in which position the signal level present before the at least one amplifier (12, 12') of this transmission path (8, 8') is present at the detection unit (1) and wherein after detection of a transmitted signal, for its duration the multiplexer (3) assumes the second switch position (S8₂, S8'₂) allocated to the active transmission path, in which position a part of the amplified signal power coupled out after the at least one amplifier (12, 12') of this transmission path (8, 8') is present at the detection unit (1), wherein the detection unit (1) has a self-holding function so that the circuit arrangement, during switching of the multiplexer (3) from its first to the second switch position (S8₂, S8'₂) allocated to the active transmission path, remains in the operating mode provided for the presence of a transmitted signal.

8. Function group according to claim 7, **characterised in that** the transmission paths (8, 8') of the circuit arrangement are merged on the output side (a) via a multiplexer (6) at an external antenna (14) for the terminal (10), wherein in the presence of a transmitted signal, the transmission path (8, 8') of the circuit arrangement which is applicable for the frequency band of this transmitted signal is connected with the external antenna (14) via the multiplexer (6) controlled by the controller (4).

9. Function group according to claim 7 or 8, **characterised in that** this is part of a circuit arrangement to compensate for the damping, which occurs in the signal paths between an external antenna (14) and the terminal (10), of the radio signals received for the terminal (10) and those emitted by the terminal (10).

## Revendications

1. Procédé de commutation de voies de signalisation d'un agencement de commutation destiné à traiter et/ou influencer des signaux de radiocommunication, selon lequel au moins les voies d'émission (8, 8') de l'agencement de commutation concerné sont activées ou désactivées pour la radiocommunication en fonction de la présence d'un signal d'émission d'un appareil terminal (10) exploité avec celles-ci et fonctionnant dans au moins une des plusieurs bandes de fréquences supportées par l'agencement de commutation, **caractérisé en ce que** les voies d'émission (8, 8'), désactivées dans un état de base de l'agencement de commutation, qui se différencient les unes des autres au moins dans la mesure où elles sont conçues pour la transmission de signaux d'émission dans différentes bandes de fréquences, sont vérifiées périodiquement dans le temps les unes après les autres quant à la présence d'un signal d'émission de l'appareil terminal (10) exploité à chaque fois avec l'agencement de commutation et **en ce que**, en absence d'un tel signal d'émission, seule la voie d'émission valable pour sa bande de fréquence est activée et uniquement cette voie d'émission sera encore vérifiée par la suite quant à la présence d'un signal d'émission, la voie d'émission concernée, vérifiée ensuite en permanence quant à la présence du signal d'émission, étant de nouveau désactivée si le signal d'émission disparaît et, après sa désactivation, la vérification périodique dans le temps de toutes les voies d'émission (8, 8') quant à la présence d'un signal d'émission étant poursuivie.

2. Procédé selon la revendication 1, **caractérisé en ce que** la détection d'un signal d'émission résulte de la comparaison du niveau de signal dans une voie d'émission respective avec une valeur de seuil définie pour la voie d'émission concernée, une décision sur la présence d'un niveau de signal à interpréter comme signal d'émission dans une des voies d'émission (8, 8') et sur la sélection de la voie d'émission (8, 8') qui doit être activée le cas échéant suite à cette présence, ayant lieu après l'évaluation des niveaux de signal de toutes les voies de signalisation et une hystérésis étant configurée entre l'instant de commutation pour l'activation d'une voie d'émission et l'instant de commutation de sa désactivation.

3. Procédé selon la revendication 1 ou 2, **caractérisé en ce que**, dans le contexte lié à la détection d'un signal d'émission de l'appareil terminal (10) et lié à la vérification de sa présence persistante, on effectue une mesure de la puissance du signal d'émission.

4. Procédé selon l'une quelconque des revendications 1 à 3, selon lequel, en fonction de la présence d'un signal d'émission, aussi bien des voies d'émission (8, 8') que des voies de réception d'un agencement de commutation destiné à traiter et/ou influencer des signaux de radiocommunication sont activées ou désactivées, **caractérisé en ce qu'**une voie de réception, transparente pour des signaux arrivants de toutes les bandes de fréquences et normes de radiocommunication supportées par l'agencement de commutation et activée dans l'état de base de l'agencement de commutation jusqu'à la détection d'un signal d'émission, est désactivée à chaque fois momentanément durant la vérification d'une voie d'émission respective quant à la présence d'un signal d'émission.

5. Groupe fonctionnel au moyen duquel des voies de signalisation d'un agencement de commutation comportant au moins des voies d'émission (8, 8') et destiné à traiter et/ou influencer au moins des signaux d'émission d'un appareil terminal (10) de radiocommunication exploité avec l'agencement de commutation concerné sont activées ou désactivées en fonction de la présence d'un signal d'émission de l'appareil terminal (10), se composant d'une unité de détection (1) équipée d'un détecteur (2) servant à la détection d'un signal d'émission de l'appareil terminal (10), de moyens de commutation électroniques (3, 5, 6, 7) et d'un contrôleur (4) servant à l'évaluation des signaux de l'unité de détection (1) ainsi qu'à la commande des moyens de commutation (3, 5, 6, 7), **caractérisé en ce qu'**un des moyens de commutation (3, 5, 6, 7) est un multiplexeur (3) qui est conçu en tant que partie intégrante de l'unité de détection (1), qui, jusqu'à la détection d'un signal d'émission de l'appareil terminal (10), est interconnecté par le contrôleur (4) de manière périodique dans le temps pour l'exploration séquentielle des voies d'émission (8, 8') quant à la présence d'un signal d'émission et qui, après la détection d'un signal d'émission, prend pour la durée de la présence dudit signal d'émission une position de commutation dans laquelle seule la voie d'émission (8, 8'), encore valable pour la bande de fréquence du signal d'émission détecté, activée par l'actionnement des moyens de commutation correspondants (5, 6, 7) au moyen du contrôleur (4), est toujours vérifiée quant à la présence d'un signal d'émission, la voie d'émission (8, 8') concernée, vérifiée ensuite en permanence quant à la présence du signal d'émission, étant de nouveau désactivée par le contrôleur (4) si le signal d'émission disparaît et le multiplexeur (3) étant de nouveau interconnecté de manière périodique dans le temps.

6. Groupe fonctionnel selon la revendication 5, au moyen duquel aussi bien des voies d'émission (8, 8') que des voies de réception (9, 9', 11) d'un agencement de commutation destiné à traiter et/ou influencer des signaux de radiocommunication sont activées ou désactivées en fonction de la présence d'un signal d'émission d'un appareil terminal (10) exploité avec l'agencement de commutation, **caractérisé en ce que** le multiplexeur (3) conçu en tant que partie intégrante de l'unité de détection (1) est interconnecté par le contrôleur (4) jusqu'à la détection d'un signal d'émission de l'appareil terminal (10) de manière synchrone et correspondante avec un multiplexeur (5) qui est disposé dans l'appareil terminal (g) et par le biais duquel une des plusieurs voies d'émission (8, 8') de l'agencement de commutation, conçues pour la transmission de signaux d'émission dans des bandes de fréquences différentes les unes des autres et regroupées en sortie, est reliée à chaque fois à l'appareil terminal (10).

7. Groupe fonctionnel selon la revendication 5 ou 6, dans lequel au moins un amplificateur (12, 12') est disposé dans chaque voie d'émission (8, 8') de l'agencement de commutation, **caractérisé en ce que** le multiplexeur (3) disposé en tant que partie intégrante de l'unité de détection (1) comporte deux positions de commutation (S8₁, S8₂, S8'₁, S8'₂) explorant chacune la voie d'émission (8, 8') quant à la présence d'un signal d'émission, le multiplexeur(3) étant interconnecté périodiquement dans le temps jusqu'à la détection d'un signal d'émission de l'appareil terminal (10) de sorte qu'il prenne toujours uniquement la première position de commutation (S8₁, S8'₁), attribuée à chaque voie d'émission, dans laquelle le niveau de signal présent devant le ou les amplificateurs (12, 12') de la voie d'émission (8, 8') respective est appliqué à l'unité de détection (1) et, après la détection d'un signal d'émission, le multiplexeur (3) prenant pour la durée dudit signal la deuxième position de commutation (S8₂, S8'₂), attribuée à la voie d'émission activée (8, 8'), dans laquelle une partie, découplée après le ou les amplificateurs (12, 12') de cette voie d'émission (8, 8'), de la puissance d'émission amplifiée est appliquée à l'unité de détection (1), l'unité de détection (1) comportant une fonction d'auto-maintien de sorte que l'agencement de commutation durant la commutation du multiplexeur (3) de sa première position de commutation (582, S8'2) à la deuxième position de commutation (S8₂, S8'₂) attribuée à la voie d'émission activée demeure dans l'état opératoire prévu pour la présence d'un signal d'émission.

8. Groupe fonctionnel selon la revendication 7, **caractérisé en ce que** les voies d'émission (8, 8') de l'agencement de commutation sont réunies en sortie (a) par le biais d'un multiplexeur (6) sur une antenne externe (14) pour l'appareil terminal (10), en présence d'un signal d'émission la voie d'émission (8, 8') de l'agencement de commutation valable pour la bande de fréquence de ce signal d'émission étant reliée à l'antenne externe (14) par le biais du multiplexeur (6) commandé par le contrôleur (4).

9. Groupe fonctionnel selon la revendication 7 ou 8, **caractérisé en ce que** cette partie intégrante d'un agencement de commutation destiné à la compensation de l'atténuation des signaux radioélectriques arrivants pour l'appareil terminal (10) ainsi que des signaux radioélectriques émis par l'appareil terminal (10), laquelle atténuation survenant dans les chemins de signalisation entre une antenne externe (14) et l'appareil terminal (10).
